# EUROPEAN PATENT APPLICATION

(11) **EP 0 631 277 A2**
(43) Date of publication of application: **28.12.1994**
(21) Application number: 94304357.0
(22) Date of filing: 16.06.1994
(51) Int. Cl.: G11B 5/596, G11B 21/10

(54) **ID-less data sector format and data controller for disk drive**

(30) Priority: 22.06.1993 US 81436; 20.08.1993 US 109839
(71) Applicant: QUANTUM CORPORATION, Milpitas California 95035 (US)
(72) Inventor: Cruz, Aurelio J., Laguna Hill, CA 92653 (US); Richmond, Scotte, San Jose, California 95117 (US); Raab, Michael L., Fremont, California 94536 (US); Akin, William R., Jr., Morgan Hill, California 95037 (US)
(74) Representative: Meddle, Alan Leonard

(57) **Abstract**

A disk drive achieves increased data storage capacity and circuit simplification by eliminating data identification fields at the beginning of each data block location defined in concentric data storage tracks of a rotating storage disk. A transducer head for writing and reading data blocks is positioned over selected tracks by a positioning mechanism. A head position servo control loop uses a plurality of equally spaced apart servo sectors which interrupt the data blocks in user data segments between adjacent servo sectors. The data blocks are located by dividing the user data segment into a predetermined number of data value location count increments, determining a count value corresponding to the beginning of the data block location, detecting a starting location of the user data segment in relation to an adjacent preceding servo sector, counting the data value location increments, comparing the data value location increments with the count value to determine an equivalence, and thereupon enabling a data transfer gate for transferring a data record to or from the data block location. Methods and apparatus for locating and bypassing servo sectors which split a data block into parts without loss of data block position are also disclosed.

## Description

### Reference to Related Application

The present application is a continuation-in-part of U.S. Patent Application Serial No. 08/081,436, filed on June 22, 1993, now abandoned.

### Summary of the Invention

This invention relates to a disk drive data storage format and a method and apparatus for locating data records. More particularly, the present invention relates to a disk drive data storage format in which user data record fields are split into segments by embedded servo sectors and wherein identification fields have been eliminated from the data record fields, in order to increase the data storage space available on the recording surface of the disk, and to methods and apparatus for tracking locations of the data record fields without identification fields.

### Background of the Invention

User data records are conventionally recorded as fixed-length blocks or "sectors" within data record fields defined in concentric data tracks formed on storage surfaces of rotating magnetic data storage disks. Rotating disks may be of a flexible plastic substrate. Such disks are known as "floppy" disks. Rotating data storage disks may also be formed on a rigid substrate of metal alloy or glass, for example. Such disks are known as "hard disks". Hard disks may be removable; most frequently, hard disks are fixed within a head and disk assembly in an enclosed, contamination-free environment.

Typically, disk drives include a data transducer which is positioned over the data surface by a head positioning mechanism, known as an "actuator". The actuator may be powered by a detent or step motor which defines stable incremental rotational positions. Step motors are frequently employed in floppy disks. For hard disks, the actuator typically is powered by a moving voice coil which is within a head position servo control loop. The servo control loop obtains position information relative to present head position and other operating parameters, controls repositioning the head from one track to another during track seeking operations, and also controls maintaining head position at a selected track centerline during track following operations. Rotary voice coil actuators are presently preferred in small form factor Winchester hard disk drives.

While there are a number of ways to provide head position information to the servo control loop, one technique which is growing in popularity is to provide a series of embedded servo sectors which are placed between user data segments circumferentially about the data storage surface. The servo sectors radiate outward from a central axis of the disk in a manner analogous to narrow spokes of a wheel. One reason that embedded servo sectors are preferred over other techniques, such as a dedicated servo disk surface, or an external position encoder, is that the same head and read channel electronics path which is reading and writing data from and to the user data segments are used to obtain the prerecorded head positioning information contained in each servo sector. The use of the same head and path for reading servo information as are used for data transfer to and from the storage surface eliminates positional offsets and electrical tolerances otherwise associated with either a servo surface or an extemal head position transducer. Orie drawback arising from embedding servo information within the data tracks is that the space required for the servo sectors is not available for storage of user data and is therefore overhead which reduces the data storage capacity of the disk.

Conventional practice has been to define data record fields to be coextensive with data sectors or spaces between adjacent servo sectors, irrespective of the radius of the data track. One example of this approach is given in commonly assigned U.S. Patent No. 4,669,004 to Moon et al., entitled "High Capacity Disk File with Embedded Sector Servo". One drawback of that approach was that the data transfer rate and resultant data storage density was not optimized at any particular radius other than the innermost usable radius, where the data density was the highest. Another approach, exemplified by U.S. Patent No. 5,121,280 to King, provided several zones of data tracks. In the arrangement disclosed in that patent, the number of data fields defined between adjacent servo sectors was a whole integer. Thus, the radially innermost zone had five record locations; a middle zone had six record locations; and, an outer zone had seven sectors, between adjacent servo sectors. The data transfer rate was adjusted at each zone to maintain the whole integer number of data record locations (data sectors) between the adjacent servo sectors. While simple, that approach also did not achieve optimum data storage densities because of the need to maintain the integer number of fixed-block-length data record locations in each zone.

Determining where a sector is located within a track is a primary task of the read/write control process (frequently referred to as a "data sequencer") within a disk drive. A traditional method to determine sector position location within a track is to provide an identification ("ID") field that is written during a track formatting operation. While ID fields have taken a wide variety of forms, essentially they provide information by which the track (or "cylinder" for multiple storage surface disk drives), head and sector may be gleaned by the sequencer.

Floppy disk data formats have generally followed two types: soft sectored, and hard sectored. These formats are typically defined in reference to a single once-per-revolution marker or fiducial line, commonly known as "index". As many features of small form factor hard disk drives evolved out of floppy disk drives, they have tended to follow the same general data format arrangements as previously used with floppy diskettes.

A soft sectored data format typically begins with a post index gap, known as "gap #1", and then with a number of consecutive user data block sectors. Each data sector begins with a header preamble, header address mark, and header, followed by a second gap, known as "gap #2". Gap #2 is then followed by a data preamble, data address mark, and a data field, followed by a third gap, known as "gap #3". At the end of the last sector, a disk rotation speed tolerance buffer, gap #4, is provided until index is reached. Each of the sectors between gaps # 1 and #4 is separated by a gap #3.

The identification field for each data sector was provided so that a data sequencer can compare a desired storage location, typically expressed as track (or cylinder), head and sector, with the actual header being read by the data transducer head. When a correspondence is detected, the sequencer then writes or reads serial data values to or from the immediately following data field. In this manner, header identification information from the disk positively identifies each user data storage location, so that data is not written into an incorrect location, thereby destroying user data previously written at that location. One example of a soft sector format for a hard disk drive is given in U.S. Patent No. 4,914,529 to Bonke, the disclosure thereof being incorporated herein by reference.

Certain types of floppy diskettes provided hard sectored formats. A hard sector format is one which is fixed by physical characteristics of the particular floppy diskette, such as a series of equally angularly spaced sector holes formed adjacent to the disk spindle opening. The number of sector holes determined the number of sectors that would be defined in each track. One commonly stated advantage of hard sector formats was that they purportedly allowed greater data storage per track because the header fields could be eliminated at the beginning of each data segment. However, common practice was to include an ID field before the data field in order to verify that the correct data sector had been reached.

To read or write a hard sectored diskette, the data sequencer used a sector counter register which was reset to zero by the index marker signal. The sector counter is then incremented when each sector hole is detected e.g. by an optical transducer. The sequencer located the desired sector by comparing contents of the sector counter register with the desired sector identification value. User data was then written to, or read from, the data field of this sector by enabling the read gate or the write gate after a fixed time interval following generation of the diskette drive sector pulse. An example of a hard disk drive employing a hard sector format is shown in U.S. Patent No. 4,208,679 to Hertrich. This patent describes a disk drive employing a notched code disk which rotated in synchronism with the data storage disk. The circumferential peripheral notches of the code disk marked in time each sector location and were used to reset a sector counter which produced measured count increments within each sector, so that e.g. servo information fields could properly be located.

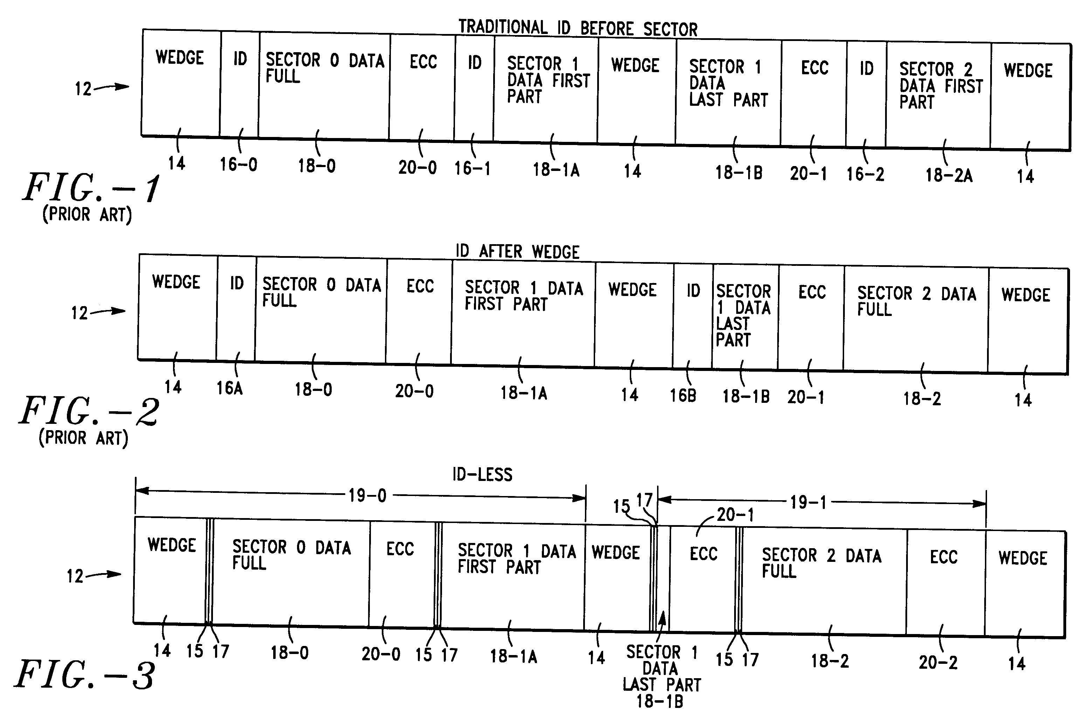

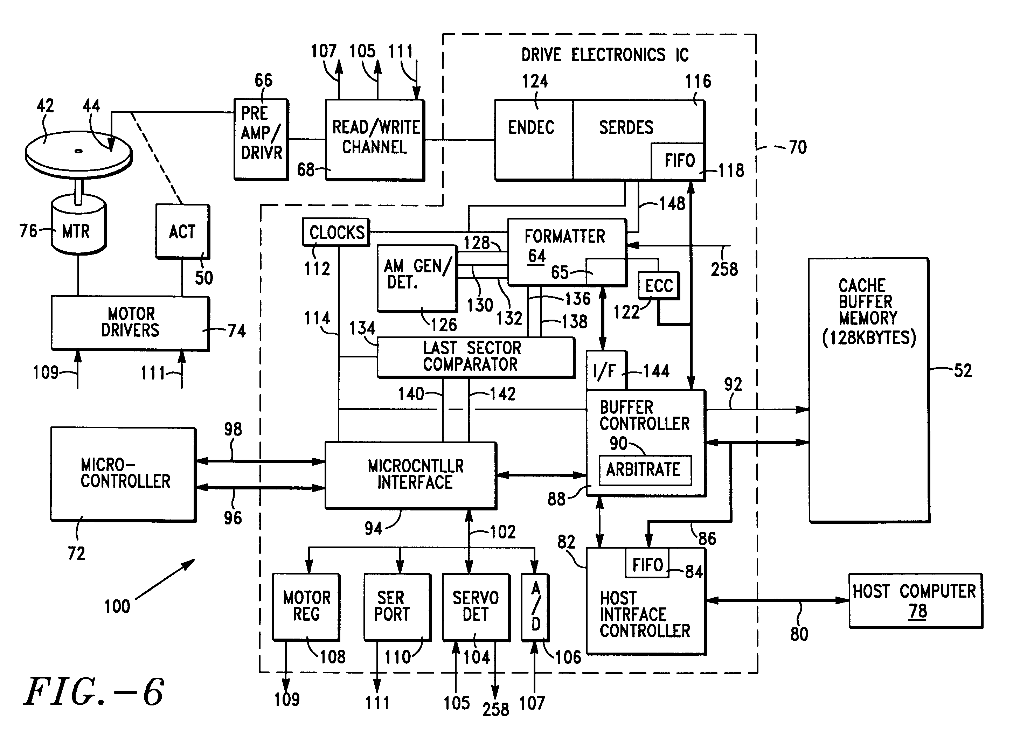

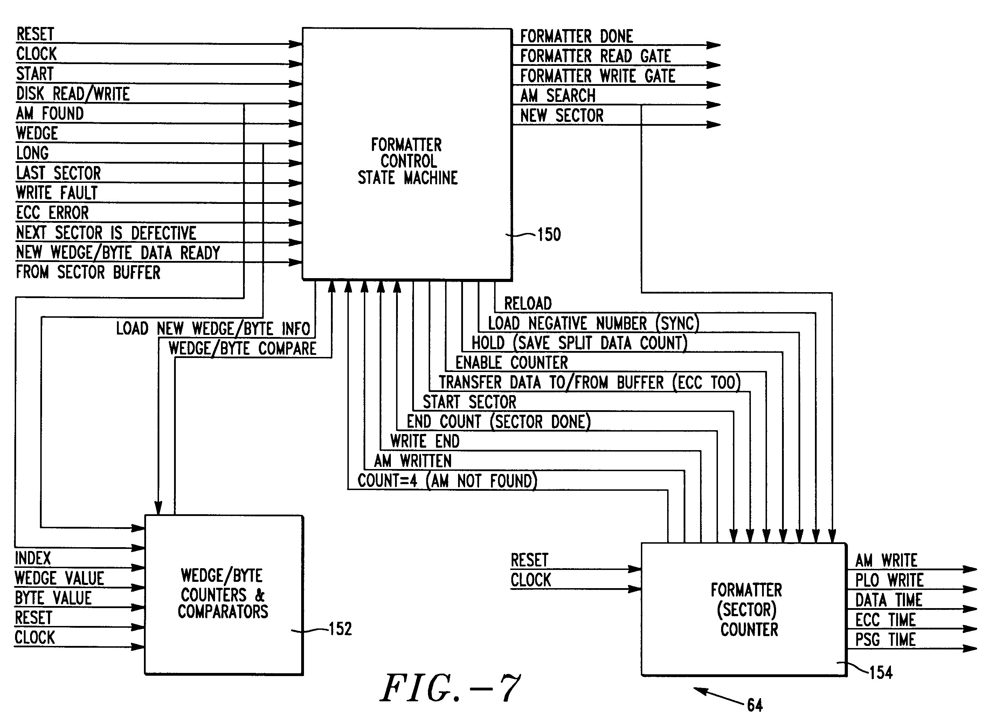

Fig. 1 exemplifies one pertinent prior approach. Turning now to Fig. 1, a circular data track 12 includes a small segment shown in Fig. 1 in linearized depiction. In this storage format servo sectors 14 interrupt or split user data fields 18 into segments. In order to identify the beginning of each data field, an ID field 16 is provided. Three ID fields 16-0, 16-1 and 16-2 are shown in Fig. 1, although typically many more data fields and ID fields are provided in actual practice. The exact number of data fields 18 is frequently a function of radial displacement of the track from an axis of rotation of the disk. The data tracks 12 are arranged in a plurality of bands of data zones, each zone having a particular track layout and a data transfer rate optimized for its inner radius, thereby increasing the amount of data storage capacity on the data storage disk. In order to achieve more optimum data storage, the servo sectors 14 divide or "split" at least some of the data fields into segments. An example of this format is given in commonly assigned U.S. Patent No. 5,170,299 to Moon, entitled: "Edge Servo for Disk Drive Head Positioner', the disclosure thereof being incorporated herein by reference. (The disk pattern with data zones is shown in, and discussed in connection with, Fig. 6, and an exemplary data track pattern is shown in, and discussed in connection with, Fig. 7, of the '299 patent.)

One of the drawbacks of the disclosed data track pattern illustrated in the '299 patent was that the data ID field 16 could be located anywhere in the user data space between successive servo sectors. Accordingly, a very robust data field address mark was needed to be sure that the ID field and the following data field segment, were properly identified and not inadvertently overwritten. One example of a suitable fault-tolerant address mark pattern useful for marking reliably each ID field, and the beginning of each data field, is disclosed in commonly assigned, copending U.S. Patent Application Serial No. 07/710,065 filed on June 4, 1991, and entitled: "Fault Tolerant 1,7 Address Mark Decoder", now U.S. Patent No. 5,231,545, the disclosure thereof being incorporated herein by reference.

Fig. 2 hereof illustrates an improvement over the prior data format shown in Fig. 1 hereof. In the Fig. 2 format, the same reference numerals are applied to the same elements; however, by inspection it is apparent that the data identification fields 16 immediately follow each embedded servo sector 14. While the data record field 18-0 immediately follows the first ID field 16A, such is not the case with field 18-1 wherein the second segment 18-1B immediately follows the second ID field 16B. By having the data ID fields immediately follow servo sectors 14, the data transducer head is already stabilized in a read mode after passing by the servo sector, and is therefore more likely to read the ID field correctly, without any interference from e.g. Barkhausen noise. The Fig. 2 format is described in greater detail in a copending, commonly assigned U.S. Patent Application Serial No. 07/954,886 filed on September 30, 1992, and entitled: Data Block Sequencing Using ID After Embedded Servo Sector in Disk Drive", now U.S. Patent No. , the disclosure thereof being incorporated herein by reference.

While these prior data track formats worked well, their use involved elaborate sequencer architectures and a considerable number of active elements (i.e. "gates") within application-specific integrated circuit electronics chips within the disk drive electronics. Also, a continuing need has remained to reduce the amount of format overhead within each data track while still providing a very robust and reliable recording method in very high capacity miniature fixed disk drives which eliminates the requirement that an ID field be provided, whether at the beginning of a data block (Fig. 1 hereof), or at the beginning of each data segment (Fig. 2 hereof), or otherwise.

### Summary of the Invention with Objects

A general object of the present invention is to increase available data storage space within a disk drive data format by eliminating data record identification fields, and still be able to locate desired data block locations.

Another object of the present invention is to provide a disk drive data storage format in which data blocks are split into segments by embedded servo sectors and in which identification fields have been eliminated from the user data blocks, in order to increase the available data storage space.

A further object of the present invention is to provide a method for locating the beginning of user data blocks which may be at any increment of a user data segment between two adjacent servo sectors without need for a data block identification preamble.

Yet another object of the present invention is to provide a simplified disk drive data transfer control apparatus within a disk drive for locating the beginning of data blocks at any increment of a user data segment between two adjacent servo sectors without providing or detecting a data block identification preamble.

One more object of the present invention is to couple an embedded servo sector locating and tracking process of a disk drive head positioner servo loop with an ID-less split data block locating and tracking process in order to reduce data storage overhead on the disk storage surface and thereby increase available data storage capacity.

Yet another object of the present invention is to substitute a simplified data formatter structure for a conventional data sequencer within a disk drive architecture, thereby simplifying the overall architecture and reducing the prime cost of the disk drive while at the same time increasing its available data storage capacity by elimination of ID fields in association with data block locations.

In accordance with principles of the present invention, a method is provided within a disk drive including a rotating disk defining a multiplicity of concentric data storage tracks, a transducer head for writing data to selected locations of user data records within the tracks, a positioning mechanism for positioning the transducer head over the tracks, and a head position servo control loop including a plurality of equally spaced apart servo sectors prerecorded at a predetermined frequency and including head positioning information read by the transducer head. The method locates the beginning of a data block location within a user data segment between adjacent servo sectors by the steps of:
dividing the user data segment into a predetermined number of data value location count increments, beginning with a starting count and continuing successively to an ending count,
determining a count value corresponding to the beginning of the data block location,
detecting a starting location of the user data segment in relation to an adjacent preceding servo sector,
counting the data value location increments from the starting location of the user data segment,
comparing the data value location counts with the count value to determine an equivalence, and
enabling a data transfer gate upon equivalence for transferring a data record to or from the data block location.

In one aspect of the invention, the method comprises the further steps of:
counting data block locations starting with determination of equivalence, wherein a data block location count total equals the fixed length of the data block,
determining an end of the user data segment at a beginning of a next adjacent servo sector while the data block location counting step is continuing,
suspending the data block location counting step at the end of a user data segment and saving a count value reached at the end,
detecting a starting location of a subsequent user data segment,
restoring the count value, and
resuming counting of the data value location counts until a maximum count is reached, marking the end of the user data block. In this aspect, the step of determining an end of the user data block may preferably be performed by detecting the ending count.

In another aspect of the invention, the method comprises the further steps of:
providing a synchronizing field and an address mark of predetermined count length at the beginning of the data block location, and
starting the step of counting data block locations at a negative count corresponding to the predetermined count length, so that said counting step results in a zero count at a first user data block location following the synchronizing field and address mark of the data block. In this aspect, further steps include writing the synchronizing field and the address mark at the beginning of the data block location during a data writing to disk operation, and reading the synchronizing field and the address mark at the beginning of the data block location during a data reading from disk operation.

Further, this aspect may comprise the additional steps of:
establishing a count window for detecting the address mark at the beginning of the data block location during the data reading operation, and
resetting the count of data value location counts to the zero count upon detection of the address mark within the count window. Also, a further step may include signaling an error condition if the address mark is not detected within the count window.

In one more aspect of the invention further steps comprise:
providing a record resumption synchronizing field and a record resumption address mark of predetermined count length at the beginning of the subsequent user data segment, and
starting the step of counting record value locations at a negative count corresponding to the predetermined count length until a zero count is reached, and
restoring the count value when the zero count is reached. In this aspect additional steps include writing the record resumption synchronizing field and the record resumption address mark at the beginning of the subsequent user data segment during a data writing-to-disk operation, and reading the record resumption synchronizing field and the record resumption address mark at the beginning of the subsequent user data segment during a data reading-from-disk operation. Further steps of establishing a count window for detecting the address mark at the beginning of the subsequent user data segment during the data reading operation, and restoring the count value upon detection of the address mark within the count window may also be performed. Also, a further step of signaling an error condition if the address mark is not detected within the count window may be carried out.

In another aspect of the invention the step of determining a count value corresponding to the beginning of the user data block location is performed by the steps of providing data block location records in a memory and retrieving a data block location record corresponding to the particular data block location.

In one more aspect of the invention the step of determining a count value corresponding to the beginning of the data block location is performed by the step of calculating the count value based upon a predetermined plan of user data blocks for the concentric tracks.

In yet another aspect of the invention further steps include:
providing a servo sector identification value in each servo sector,
detecting the servo sector identification value as a corresponding servo sector is read by the transducer head,
correlating the detected servo sector identification value with the data block location to determine that the user data segment containing the beginning of the data block location has been reached.

These and other objects, advantages, aspects and features of the present invention will be more fully understood and appreciated upon consideration of the following detailed description of a preferred embodiment, presented in conjunction with the accompanying drawings.

### Brief Description of the Drawings

In the Drawings:

Fig. 1 is a lineal depiction of a circular data track format of a prior art disk drive employing embedded sector servo head positioning technology wherein embedded servo sectors split the data fields, and wherein data sector identification fields precede each data sector.

Fig. 2 is a lineal depiction of a circular data track format of a later prior art disk drive also employing embedded servo sectors and wherein the data sector identification field is provided immediately following each servo sector.

Fig. 3 is a lineal depiction of a sectorized circular data track format which has eliminated the data identification field in accordance with principles of the present invention.

Fig. 4 is a series of related diagrams illustrating a servo sector (wedge) layout and usage of the servo address mark to reset a user data segment byte counter in accordance with the present invention.

Fig. 5A is a highly diagrammatic plan view of a storage disk data surface in accordance with the Fig. 3 format.

Fig. 5B is a memory map for mapping the layout of the sectors within the radial data zones within the Fig. 5A format, in accordance with aspects of the present invention.

Fig. 6 is a block diagram of a hardware data channel architecture within a disk drive incorporating principles of the present invention.

Fig. 7 is a block and control signal diagram of a formatter within the Fig. 6 architecture.

Fig. 8 is a state diagram for read mode (left side) and for write mode (right side) of the Fig. 7 formatter.

Fig. 9 is a series of diagrams providing an example of operation of a wedge byte counter and a formatter counter in relation to a Fig. 3 format, illustrating principles and aspects of the present invention.

Fig. 10 is a block diagram of a hardware-based implementation of the present invention.

Fig. 11 is a state diagram illustrating operation of a format calculator circuit within the Fig. 10 hardware implementation.

Fig. 12 is a state diagram illustrating operation of a control state machine circuit within the Fig. 10 hardware implementation.

Fig. 13 is a simplified block diagram of circuitry providing an alternative preferred embodiment of aspects of the present invention.

Fig. 14 is a series of five graphs drawn along a common time base illustrating aspects and features of operation of the Fig. 13 embodiment.

### Detailed Description of Preferred Embodiments

In the following discussion, the same elements and features discussed above in conjunction with Figs. 1 and 2 are used to identify the same elements of preferred embodiments of the present invention, and common reference numerals should be understood by the reader to refer to the same structural or functional elements throughout this description.

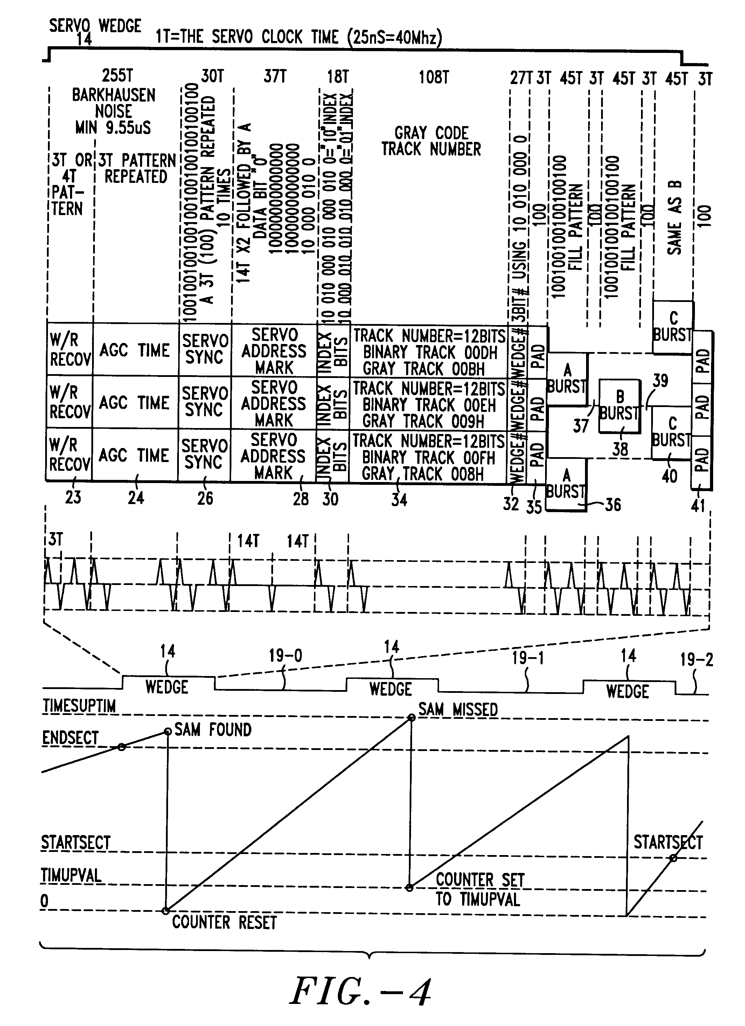

In accordance with principles of the present invention, identification fields 16 (shown in the Figs. 1 and 2 prior art examples) are eliminated in the data tracks 12 to achieve an ID-less data track format and method. ID-less operation is based upon determining the start of a data block location by counting servo wedges 14 and byte locations of user data segments 19 lying between adjacent servo wedges (see Fig. 4), and then enabling reading or writing when the desired data transducer head is directly over the selected data block location within a data segment of the selected data track. When the head is at the correct area of the disk, the new process asserts either a read gate (RG) or a write gate (WG) control signal, and a formatter state machine then reads (or writes) a data sync field 15, a data address mark 17, the actual user data block 18, and the ECC remainder bytes 20. By eliminating the identification fields 16, approximately four to seven percent (4-7%) of disk space is freed for user data storage, thereby extending by the same amount the user data storage capacity of a disk drive 100 incorporating the principles hereof. In addition, about 7500 IC gates are saved over prior sequencer designs needed to process the conventional identification field data. This reduction in gate count decreases the cost of an application-specific integrated circuit including the data handling function.

Turning to Fig. 3, a data track 12 includes a series of embedded servo sectors 14 followed by data blocks 18; one right after the other. In Fig. 3, three user data blocks 18-0, 18-1 and 18-2 of predetermined byte length are shown within two user data segments 19-0 and 19-1 lying between adjacent servo sectors 14. In the particular format illustrated, data block 18-0 lies entirely within data segment 19-0, and data block 18-2 lies entirely within user data segment 19-1. Data block 18-1 is split into a first part 18-1A lying in segment 19-0 and a second part 18-1B lying in segment 19-1. While the data blocks 18 are shown in Fig. 3 as being of fixed length, such as 600 bytes, for example, it will be appreciated by those skilled in the art that each data block 18 may have a unique length, depending upon data compression, or other processing of the user data record to compact information or reduce the amount of storage space required for the particular user data record. Throughout this description the reference to "user data block" thus contemplates both blocks or data fields of fixed length and blocks having determined lengths which may vary in accordance with an overall data record plan or algorithm.

Now referring to Fig. 4, each servo sector or wedge 14 includes a read/write recovery buffer field 23, an AGC field 24, a servo sync field 26, a servo address mark 28, an index field 30, a servo sector number field 32, a Gray-coded track number field 34, and e.g. three radially offset burst fields: A burst 36, B burst 38 and C burst 40. Each wedge 14 ends with a short pad field 41 to provide a write-splice area in which a data transducer head 44 transitions from read mode to write mode. Pad fields 35, 37, and 39 are also provided to separate burst field 36 from the track number field 34 and to separate the burst fields 36, 38 and 40 from each other.

Within the servo wedge 14, nine T cells are used for each data bit zero or one. Thus, a data bit zero may be expressed as a T cell pattern of 10 000 010 0 wherein a "1" denotes a flux transition, and a "0" denotes the absence of a flux transition, within the T cell interval. The index marker field 30 is e.g. 18 T cells in duration. It provides for three distinct patterns, a "10" index pattern in the form of 10 010 000 0 10 000 010 0; a "01" index pattern in the form of 10 000 010 0 10 010 000 0; and,a no index pattern of 10 000 010 0 10 000 010 0. Additional fault tolerance is achieved by providing two distinct index patterns within the index marker field 30. One pattern, such as the "10" pattern may therefore serve as a "pre-index" marker which signals that the next servo wedge 14 will contain the once-per-revolution index marker (in the "01" pattern).

Except for the index field 30, the servo sector number field 32 and a preferred clock cell interval (1T) of 25 nanoseconds (40 MHz), the fields found within the illustrated servo wedge 14 are substantially as described in the referenced and commonly assigned U.S. Patent No. 5,170,299. The sector number field 32 is newly provided herein and provides a verification of a servo sector count held in a sector number counter described hereinafter. All of the fields, including the servo sector number field 32, are read by the data transducer head 44 as it passes over each servo wedge 14. The information recorded in each servo wedge 14 is then recovered without read channel phase lock by a separate servo data detector circuit 104 which preferably is of the type described in a commonly assigned, copending U.S. Patent Application Serial No. 07/710,172 filed on June 4, 1991 entitled: "Asynchronous Data Reader for Embedded Sector Servo Disk Drive", the disclosure thereof being incorporated herein by reference.

Fig. 4 also illustrates a relationship between detection of the servo address mark in the servo address mark ("SAM") field 28 and restarting of a user data segment byte counter 154 within a formatter 64 described hereinafter. Ordinarily, the counter 154 is reset to zero and restarted upon detection of each SAM in accordance with a SAM found signal generated by a servo address mark detector within a servo decoder 104. In the event that a SAM is not detected, a sector counter times out, and the counter 154 is reset to a time-up value and restarted when the SAM time-out occurs. A start-of-sector count is then reached by the counter 154 after the wedge 14 has passed by. The sector byte counter 154 continues to increment until the next SAM found signal is asserted (or a "SAM missed" signal is asserted) by the SAM detector included within the servo detector circuit 104. Before being reset to zero, the sector counter reaches a byte count ENDSECT marking the end of the data segment 19. Further count increments then mark locations within the next servo wedge 14 until either the servo address mark found signal "SAM found" is true, or until a time's up timer signal TIMESUPTIM is reached which denotes "SAM missed".

Fig. 5A illustrates in highly diagrammatic format a plan view of a data storage surface of a rotating magnetic data storage disk 42. A multiplicity of concentric data tracks 12 is defined upon the illustrated surface of the disk 42. Each track is written to and read by a magnetic data transducer head 44, which can be of the metal in gap (MiG), thin film, or inductive write/magneto resistive read (MR) type, for example. The head slider 44 is mounted on a load beam 46 which in turn is mounted to a head arm 48 of a voice coil rotary actuator assembly 50. As depicted in Fig. 5A, the storage surface of the disk 42 is arranged as a series of three concentric data zones: an outer zone 0, an intermediate zone 1, and an inner zone 2. In the illustrated example, each track 12 of the outer zone 0 has nine data sectors 18-0 through 18-8; each track of the intermediate zone has seven data sectors 18-0 through 18-6; and, each track of the inner zone has five data sectors 18-0 through 18-4. The arrangement illustrated in Fig. 5A is vastly simplified over a preferred practical arrangement, and such an arrangement might typically include a greater number of servo sectors 14 and data segments 19. The number of data blocks 18 within each track also might be substantially higher, depending upon data block length, number of servo sectors 14, and magnetic recording density, etc.

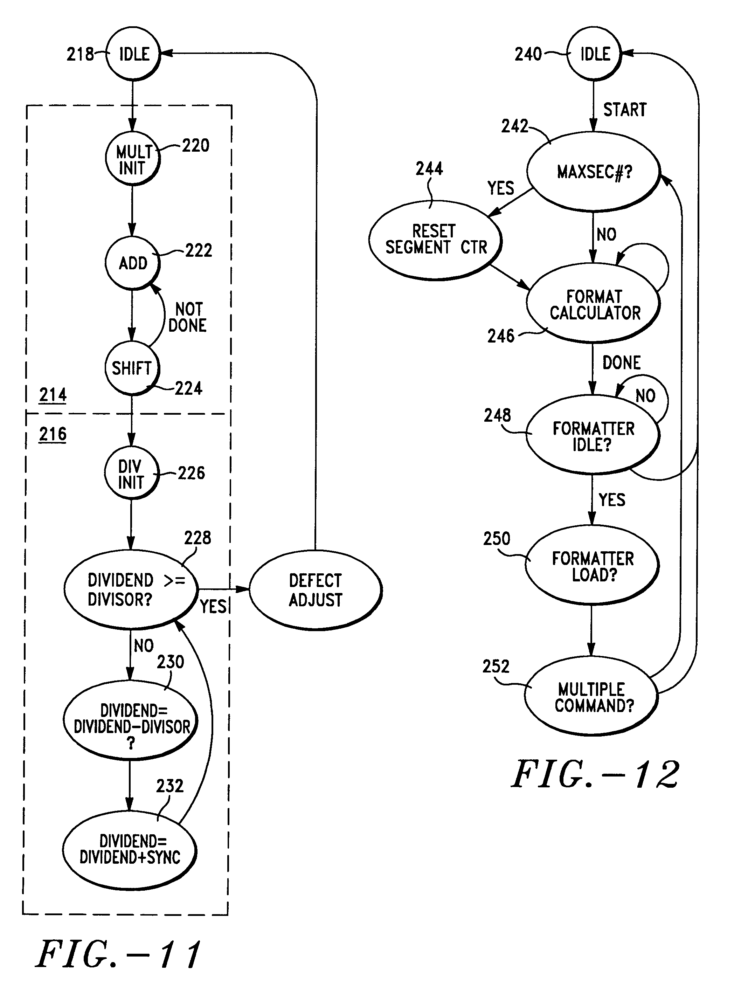

As shown below in the discussion of Figs. 10-12, it is practical to calculate the servo wedge and byte location information needed for operation without identification fields. However, this first preferred embodiment does not calculate the wedge and byte values needed to locate the beginning of each data block 18. Rather, this information is stored in a sector buffer segment or page of a cache memory 52 of the disk drive. Immediately before each sector is accessed (preferably during servo wedge time), a block record for the data block 18 is transferred from the sector buffer to FIFO sector format registers 65 of a formatter 64, described in greater detail hereinafter.

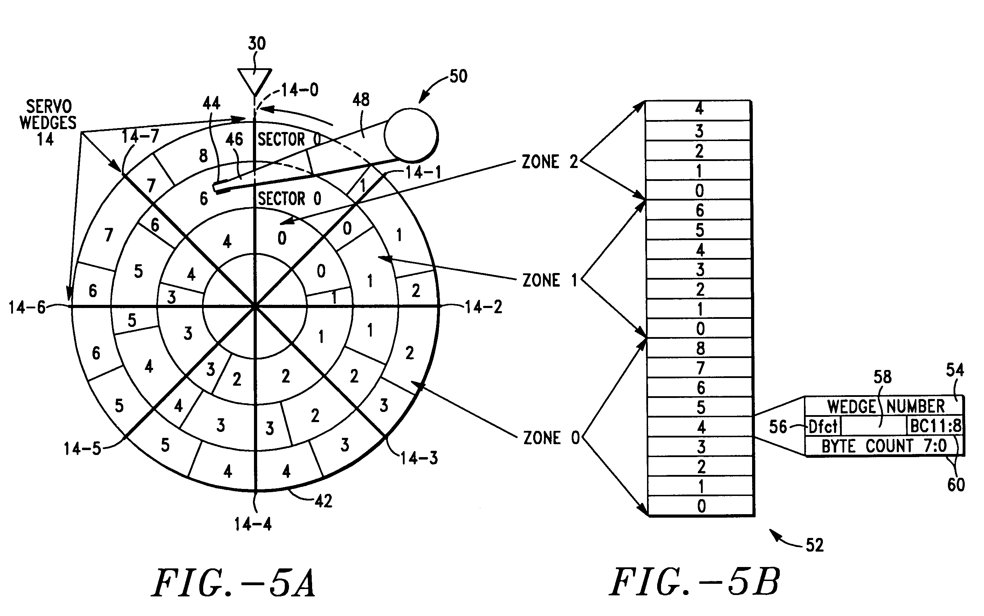

Fig. 5B illustrates a data arrangement for a sector buffer segment of the drive cache memory 52. In the presently preferred embodiment, an individual data field format record of the particular arrangement of the data block 18 relative to the servo wedges 14 is kept for each data block, and for each zone. This association is also shown in Fig. 5B in relation to Fig. 5A. Each data block format record preferably includes a three byte record including a servo wedge number field 54, a defective user data segment flag 56 and e.g. a twelve-bit byte count field 60. The byte count field 60 falls over two of the bytes of the data block record. If the number of servo sectors 14 is limited e.g. to not more than 128, if the byte count for the start of a data block 18 is forced to be on a four byte boundary wherein the least two significant location bits are zero, and if the number of bytes within the user data segment 19 is less than 1024 bytes, it is practical to realize a two byte data block record, instead of a three byte record. In this alternative two byte example, the defective segment flag 56 and the seven bit servo wedge number are held in the first byte location, and the byte count [9:2] is held in the second byte.

Fig. 6 illustrates an architecture 100 for a miniature hard disk drive including the disk 42 and data transducer 44. Electrical signals read from the disk 42 are preamplified by a preamplifier circuit 66 which also functions as a head select/write driver during write mode. A read/write integrated circuit 68 functionally includes a data separator, a peak detector, and a data synchronizer including a phase lock loop operating under control of a programmable frequency synthesizer, so that the data transfer rate for the particular data zone may be selectively generated. A drive electronics chip 70 includes most of the functions of the disk drive 100. The drive chip 70 is connected to the cache buffer memory 52 via a data bus structure 86 and a control bus structure 92, to a programmed microcontroller 72 via a data/address bus 96, to an address bus 98, to a motors driver circuit 74 via control paths 109 and 111, and to a host computer 78 via an interface bus structure 80. The motors driver circuit 74 provides suitable driving signals to e.g. a three-phase spindle motor 76 which rotates the disk 42 at a predetermined angular velocity, and to a coil of the rotary voice coil actuator structure 50.

The drive electronics chip 70 includes a host interface controller circuit 82 for implementing a predetermined interface bus structure with the host 78, such as SCSI II, IDE, PCMCIA, or some other bus-level interface protocol. A first-in/first-out buffer 84 buffers data transfers between the interface 82 and the cache buffer memory 52 via the bus 86. A buffer controller circuit 88 generates and puts out addresses and control signals including refresh signals to the dynamic cache buffer memory array 52 via the control bus 92. An arbitration circuit 90 within the buffer controller 88 arbitrates buffer memory access requests made by a serializer/deserializer (SERDES) 116, the microcontroller 72 via a microcontroller interface 94, the host interface controller 82, and the formatter register FIFO 65 via a formatter interface 144. Arbitration of direct access requests to the cache buffer memory 52 is preferably carried out in accordance with the teachings of copending, commonly assigned U.S. Patent Application Serial No. 08/056,428 filed on April 30, 1993, and entitled: "Shared Memory Array for Data Block and Control Program Storage in Disk Drive", the disclosure thereof being incorporated herein by reference.

An internal bus structure 102 within the integrated circuit 70 connects the microcontroller interface 94 with an analog to digital converter 106, a servo detector circuit 104, a motor regulator circuit 108 and a serial control port 110. The servo detector circuit 104 receives raw data via a path 105 from the read/write channel in order to detect, decode and put out the information contained within the servo wedges 14 to the microcontroller 72. The analog to digital converter 106 receives sampled and held peak amplitude values from a peak detector within the read/write channel 68 via a path 107 which are sequentially obtained from selected ones of the A, B and C burst fields 36, 38 and 40 and converts these sampled amplitudes into digital values for processing within a digital servo loop implemented by the microcontroller 72. The servo values are processed and utilized as described in the referenced U.S. Patent No. 5,170,299.

The motor regulator circuit 108 implements digital motor speed regulation and passes digital control values over a path 109 to the analog motors driver chip 74. The motor regulator circuit, and the spindle motor control circuit of the analog motors driver chip 74 may preferably follow the teachings of commonly assigned U.S. Patent No. 5,210,474 to Oswald, entitled: "Digital-Analog Driver for Brushless D.C. Spindle Motor", the disclosure thereof being incorporated herein by reference. The serial port 110 sends serial control values via a serial control path 111 e.g. to the motors driver circuit 74 to control the driving current applied to the actuator 50, and to the read/write channel 68 to control the frequency generated by the frequency synthesizer thereof.

A clocks circuit 112 generates a disk clock and a byte clock in synchronism with data being read from the disk 42 during data read operations, and in synchronism with a reference byte clock put out by the data synchronizer within the read/write electronics 68 during write mode. These clocking signals are broadcast throughout the chip 70 via a clocks bus 114.

The SERDES 116 serializes data bytes from the FIFO 118 during writing operations and sends them through an encoder/decoder 124 to the read/write channel 68. When a data block is written, an ECC syndrome generator circuit 122 generates and appends a series of ECC remainder bytes to the data block in the ECC field 20 of each data sector 18. During read mode, the ECC syndrome generator recovers the appended ECC remainder bytes and determines whether they correspond to a predetermined value, such as zero. If so, the recovered data is valid and is released for transfer to the host computer. If not, the syndrome bytes are latched and passed to the microcontroller 72 for error correction processing. The ECC process is substantially in accordance with U.S. Patent Application Serial No. 07/650,791 to Peterson, et al, filed on February 1, 1991 and entitled: "On-The-Fly Error Correction With Embedded Digital Controller", now U.S. Patent No. 5,241,546, the disclosure thereof being incorporated herein by reference.

The ENDEC 124 encodes and decodes the data stream to and from a predetermined data coding convention, such as 1,7 RLL, or 0,4,4 PRML, the latter coding arrangement being described, for example, in commonly assigned, copending U.S. Patent Application Serial No. 07/937,604 filed on August 27, 1992 by Abbott et al, and entitled: "Disk Drive Using PRML Class IV Sampling Data Detection with Digital Adaptive Equalization", now U.S. Patent No. , the disclosure thereof being incorporated herein by reference.

The foregoing description is provided by way of background illustration of the present invention, and should not be construed as limiting the scope hereof. Turning now specifically to aspects of the present invention, the formatter circuit 64 works in conjunction with a data address mark detector circuit 126 which functions to detect the data address mark 17 during data reading operations. A control line 130 from the formatter 64 enables the circuit 126 to begin searching for the data address mark 17 during data reading. When the address mark is found, a control signal is generated by the circuit 126 and sent back to the formatter 64 over a path 132 in order to zero a formatter counter 154 (Fig. 6). While a wide variety of suitable address mark patterns may be employed, fundamentally the address mark must be robust, and it must also must not decode as a data value in accordance with the coding convention imposed by the ENDEC 124. One example of a robust, fault tolerant address mark pattern for a 1,7 RLL coding convention is provided in the referenced U.S. Patent Application Serial No. 07/710,065, now U.S. Patent No. 5,231,545.

Each sync field 15 and data address mark 17 is written by forcing the encoder 124 to write a pattern which is close to, but actually violative of, a legally coded data pattern for coded data. When the ENDEC 124 implements a 1,7 RLL coding convention, one preferred pattern is 1000000010000000. When the address mark 17 is to be written, a control line to the ENDEC 124 is asserted, and the desired address mark pattern is then written.

A last sector comparison circuit 134 also works in conjunction with the formatter 64 in order to detect when the last sector of a data block to be read or written has been reached. The comparison circuit receives a last data sector select value from the microcontroller interface 94 via a path 140, and it also receives a current data sector select value from the interface 94 via a path 142. The comparison circuit 134 receives the latest sector value from the formatter 64 via a path 138 and detects a correspondence between the last sector value supplied by the microcontroller 72. When a correspondence is detected, the comparison circuit 134 puts out a last sector detection control to the formatter 64 via a path 136 to indicate that the last sector 18 of the data block being processed has been reached.

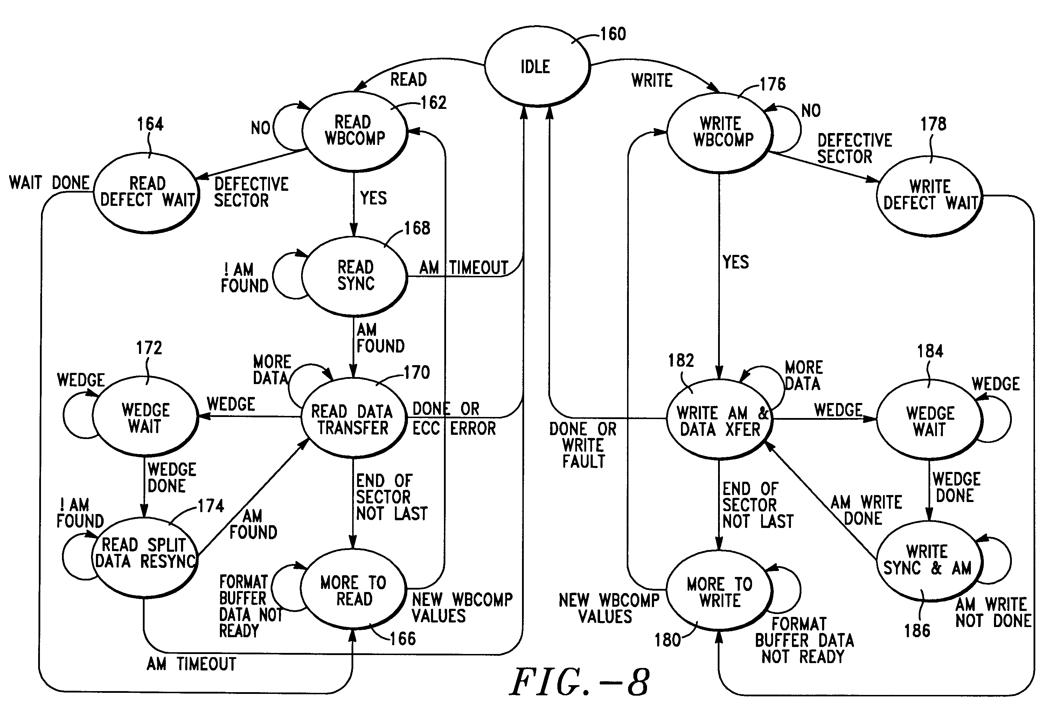

The formatter 64 is shown in greater structural detail in the more detailed block diagram of Fig. 7. Therein, a preferred implementation of the formatter 64 comprises a formatter control state machine 150, a servo wedge/byte counter and comparison circuit 152 and a data sector format counter circuit 154. The function of the formatter control state machine 150 is described hereinafter in connection with the Fig. 8 state diagram. The servo wedge/byte counters and comparators circuit 152 counts servo wedges 14 and also counts byte locations in the user data segment 19 from the end of each wedge to the beginning of the next servo wedge 14, as illustrated in Fig. 4. The data sector format counter circuit 154 counts out the bytes corresponding to the sync field 15, data address mark 17, user data field 18, and ECC field 20 of each data block location.

In accordance with one feature of the present invention, a direct count correspondence is desired between the count held in the formatter counter 154 and the byte location within the data block 18. Accordingly, the formatter counter 154 is preloaded with a negative count corresponding in byte length to the respective lengths of the data sync field 15 and the data address mark 17. Once the address mark 17 is found, the formatter counter 154 reaches a zero count and begins counting upwardly with the first data byte corresponding to a first count value of one, etc. Thus, the formatter counter 154 generates control gates for writing the sync field 15, the address mark 17, the data field 18, and the ECC field 20, for example.

Turning now to Fig. 8, the states of the formatter control state machine 150 are shown, the left hand series of states describing read mode operations, and the right hand series of states describing write mode operations. Read mode is described first. Both read and write modes begin with an idle state 160. The state machine loops in the idle state 160 until the microcontroller 72 starts up the formatter 64.

Upon startup of the formatter 64, a sector format record is transferred from the buffer 52 to the FIFO registers 65. When the format data is transferred, a jump is made either to the read mode path on the left hand side of Fig. 8, or to the write mode path on the right hand side of Fig. 8, depending upon the disk read/write bit in the microcontroller command register. The idle state 160 is also where the state machine 150 returns upon detection of any errors or when any time-out occurs.

Upon entering the read mode, the formatter state machine 150 checks the defective sector flag bit 56 of the sector's format record in its format FIFO 65 to see if the current sector is defective at a state 162. If so, a jump is made to a read defect wait state 164. The read defect wait state 164 imposes a one byte delay time so that the format record for the next data block may be retrieved by the formatter 64 from the sector format segment of the buffer 52. The state machine 150 then jumps to a more-to-read state 166. At state 166 the formatter 150 then transfers more data from the FIFO 118, increments the sector counter, and then returns to state 162. If the current data block is not defective as tested at the read wedge byte comparison state 162, the formatter state machine 150 waits for the wedge and byte counters 152 to compare with the sector format data in the registers 65. When a wedge/byte comparison within the comparison circuit 152 occurs, meaning that the beginning of the desired data block 18 is reached, a jump is made to a read sync field state 168.

In the read sync field state 168 the formatter state machine 150 asserts read gate and waits for an address mark found control to be returned by the address mark detector 126 over the path 132. As noted above, the formatter counter 154 is started at a negative number which is equal to the number of bytes of the phase locked oscillator sync field 15 and the address mark field 17. If the address mark found control is not received by the time the counter increments to e.g. four counts beyond zero, namely the nominal address mark location, an address mark not found error has occurred, and a jump is made to the idle state 160. When the address mark 17 is found within its window, the formatter counter 154 is reset to zero, and a jump is made to a read data transfer state 170.

The formatter 150 remains in the read data transfer state 170 until all of the data bytes and ECC remainder bytes of the present data block 18 have been transferred. If, while data is being transferred, a wedge time signal is received, read gate is deasserted, and a jump is made to a read wedge wait state 172. The count then held in the formatter counter 154 is saved, so that upon return from a read split data resynch state 174, the count may be reloaded into the formatter counter 154 so that it can resume counting the byte locations of the present data block location which has been split by the servo sector. At the end of the current data block after the user data and ECC bytes have been transferred, a jump is made to the more-to-read state 166, unless a last sector comparison flag is set. If the last sector comparison flag is set in the last sector comparator 134, then the block transfer has been completed, and a jump is made to the idle state.

During the read wedge wait state 172, the formatter state machine 150 deasserts read gate and waits for the servo detector 104 to signal the end of the current servo wedge time interval. Then, the formatter state machine 150 jumps to a read split data resynch state 174. While in the resynch state 174 the formatter state machine 150 asserts read gate and waits for an address mark found control signal to be asserted over the line 132 by the address mark detector 126. If an address mark found signal is not received by the time the counter reaches e.g., a plus four (+4) count, which is four byte times past the nominal location of the address mark 17, an address mark not found error occurs, and a jump is made by the state machine 150 to the idle state 160. When the address mark 17 is found within the four byte window, the formatter counter 154 is reloaded with the saved count reached before the wedge interrupt, a jump is made to the read data transfer state 170, and the formatter counter 154 is restarted.

The purpose of the more-to-read state 166 is to wait for the data from the sector buffer to be ready, and to increment the current block number in the wedge/byte counters and comparators circuit 152. After the new wedge/byte comparison values are loaded, a jump is made to the read wedge byte comparison state 162 and a comparison is made in the wedge/byte counters and comparators circuit 152 to determine if the last block has been reached and to generate and put out the last block signal tested at the state 170. The sector format data from the sector buffer should be ready immediately in the more-to-read state 166, except upon entry from the read defect wait state 164, in which case the registers 65 will be filling with new zone/sector data. This delay is not problematic, as the defective block is being passed over by the data transducer 44 as this data transfer occurs, and a wedge/byte comparison will occur at the beginning of the next block. The read defect wait state 164 is provided so that the state machine 150 will have time to transfer the next wedge byte block format data from the buffer 52 into its registers 65.

The write mode begins when the state machine 150 progresses from the idle state 160 to a write wedge byte comparison state 176. While in the write wedge byte comparison state 176, the formatter state machine 150 first checks to see if the current sector is defective. If so, write gate is not asserted and a jump is made to a write defect wait state 178. A one byte delay ensues at state 178 so that the formatter state machine 150 can obtain the next wedge byte data block record from the buffer 52. If there is no defect in the block to be written to, the formatter state machine 150 waits for the wedge and byte counters 152 to compare with the data read from the formatter segment of the buffer memory 52. When wedge/byte comparison is true, a jump is made to a write address mark and data transfer state 182.

The write address mark and data transfer state 182 will be left and the idle state will be entered if a write fault condition occurs, or after the end of transfer of the ECC remainder bytes 20 of the last block to be written (i.e. the current block value compares with the last block value, as tested in the last block comparison circuit 134. While in this state 182, the formatter counter is started with a negative number equal to the length of the PLO sync field 15 and the address mark field 17. Data begins when the formatter counter 154 reaches a zero count. If a servo wedge time signal occurs, write gate is deasserted, the count reached by the formatter counter 154 is saved, and a jump occurs to a write wedge wait state 184. In this state 184, the formatter state machine 150 deasserts write gate (so that the servo sector information is not overwritten), and waits for the servo detector 104 to signal the end of the servo wedge time interval. The formatter state machine 150 then jumps to a write sync and address mark state 186.

While in the write sync and address mark state 186, the formatter state machine 150 causes the formatter counter 154 to be loaded with a negative number and then begins the counter, so that the PLO sync field 15 and the address mark 17 may be written before data writing. At zero count time, the state machine jumps back to the transfer data state 182, and the count of the format counter which had been saved at the beginning of the servo wedge interval is reloaded into the formatter counter, and it then resumes counting to complete the transfer of bytes for the current data block 18. As long as sector data and ECC data is incoming for writing to disk, the state machine 150 loops in this state 182. At the end of the transfer of the current data block 18 including its ECC remainder bytes, a jump is made to the idle state if the last block of the record to be written to disk has been completed. If not, a jump occurs to a more-to-write state 180.

The purpose of the more-to-write state 180 is to wait for the data block format data retrieved from the buffer 52 to be ready at the formatter 150 and to increment the current block number held in the wedge/byte counters and comparators circuit 152. This value is then compared in the last block comparison circuit 134 to determine if the last block of the record has been reached. The data from the sector format buffer 52 should be ready immediately in this state 180, except when the state is entered from the write defect wait state 178, in which case the block format buffers 65 will be filling as the defective block is passed by.

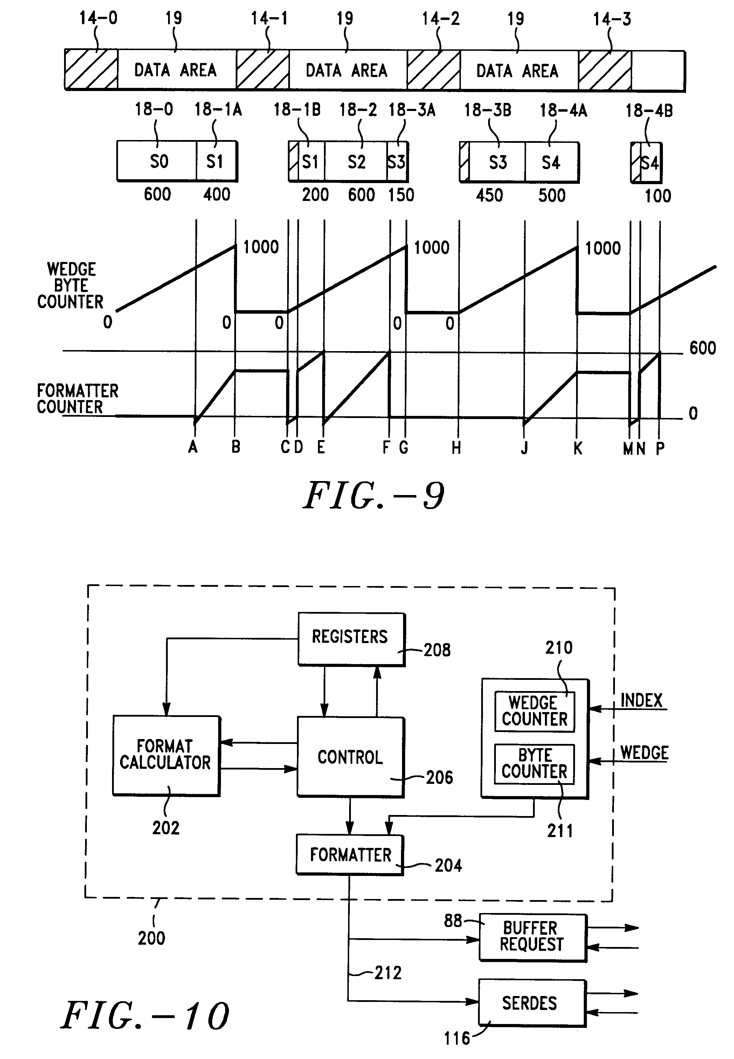

Referring to an example provided in Fig. 9, each data area or segment 19 has a predetermined byte length, such as 1000 byte locations (count increments), for example. Accordingly, as shown in Fig. 9 at the beginning of each data segment 19, or as shown in Fig. 4 upon detection of the servo address mark (SAM Found), the wedge/byte counter 152 is initialized and begins counting upwardly, e.g. from zero to 1000. There are four data blocks 18 illustrated in juxtaposition with the data segments 19. In this example, each data block 18 is of a predetermined byte length, such as 600 bytes. This length is made sufficiently long to accommodate the PLO sync field 15, the address mark pattern 17, e.g. 512 user data bytes, and 16 or more ECC remainder bytes.

When the wedge/byte counter reaches a predetermined count, such as 600 as at point A in Fig. 9, a wedge/byte comparison signal is provided to the formatter state machine 150 and the formatter counter 154 is started to count upwardly, beginning with a preset negative count covering the PLO field 15 and address mark 17. A read or write process then advances for 400 counts for a first 400 byte segment of data block 18-1A. Then, the next servo sector 14-1 is reached at point B, and the wedge counter is incremented and the byte counter is reset to a zero count, and the formatter counter count of 400 is saved in a register of the formatter 64. After the servo wedge 14-1 is passed, as at point C, a negative count is loaded into the formatter counter 154 to cover a post-wedge PLO sync field 15 and address mark 17. Once the address mark 17 is passed, the formatter counter is reloaded at location D with the accumulated count (400) saved at location B, and the wedge byte counter 152 resumes its upward count, until 600 is reached at the end of the second segment of the block 18-1 at location E. The formatter counter 154 then resets to a minus count and begins counting upwardly for the data block 18-2. The end of this data block is reached at location F, and the formatter counter is reset to zero, thereby bypassing data block 18-3, a defective block.

Even though data block 18-3 is flagged as defective, and the sector formatter does not count, the wedge byte counter 152 continues its operations, ending at location G and resetting and restarting at location H so as to mark the location of servo sector 14-2. The defective block 18-3B ends at location J, and the formatter counter 154 is reset to a negative number and begins counting locations for the next data block 18-4. This count is interrupted and saved at location K by the next servo wedge 14-3. Following the end of the wedge 14-3 at location M, the formatter counter is set with a negative number to cover a post wedge PLO field 15 and address mark 17. When the formatter counter reaches (or is reset to zero), the saved count reached at location K is reloaded and counting resumes at location N until the end of split block segment 18-4B.

In this manner it is clear that a PLO sync field 15 and an address mark 17 may be provided to resynchronize the data separator byte clock following each servo wedge 14, and at the beginning of each data block 18. The sync field 15 and address mark after each servo wedge 14 is needed because the servo information is written at a fixed frequency unrelated to data zone, and these two fields are also needed at the beginning of each data block 18 to provide robust recovery from a write splice so that the block may be written separately from adjacent blocks.

### Embodiment of Figs. 10-12

Fig. 10 illustrates an alternative preferred embodiment of the present invention. In this alternative embodiment, a hardware-based architecture 200 performs necessary calculations to determine the starting location of each user data block 18. Accordingly, the architecture 200 includes a format calculator 202, a formatter 204, a controller 206, a bank of registers 208, and a counters block including a wedge counter 210 and a byte counter 211. The counters are responsive to an index signal which resets both counters, and to a wedge signal which resets the byte counter 211 and increments the wedge counter 210 so that it holds a running count of servo sectors or wedges until an index signal occurs. An output path 212 from the formatter 204 extends to the buffer controller circuit 88 and also to the SERDES 116. The buffer controller 88 and the SERDES 116 are essentially as described in conjunction with the previous embodiment in connection with Fig. 6, and the same description given thereto applies in this alternative embodiment.

The format calculator 202 calculates positions within each data block 18 by calculating an offset from the index marker 30 for a given data block, and then by calculating in bytes how far the desired position is within the track with respect to the servo wedges 14. In order to perform this calculation, the calculator 202 multiplies the total data block byte length by a desired data block number in order to determine an offset from the index marker 30. The resultant product is then divided by the data segment number and byte offset within the identified data segment. The calculator 202 also calculates the end of a given data block 18. It also determines an offset from index which is adjusted for the additional sync and address mark fields 15 and 17 following each servo wedge 14.

Referring now to Fig. 11, the format calculator 202 carries out its calculations, first by performing a series of multiplications in a multiplication phase 214, and then by performing a series of divisions in a division phase 216. Beginning from an idle state 218, a multiplication initiation state 220 is reached within the multiplication phase 214. In the initiation state, operators are loaded from the bank of registers 208, and an internal counter is reset to zero. At a step 222, if an operator's least significant bit is one, an increment count is added to the operator. At a step 224, both operators are shifted, and after each shift a return is made to the step 222 to determine if an addition takes place. After the required number of shift operations have been performed, the multiplication phase 214 is complete, and the division phase 216 is entered.

In the division phase 216, a step 226 initiates the division phase by enabling a divide count. A logical node 228 compress the dividend to the divisor until the divisor is greater than or equal to the dividend. A process step 230 then subtracts the divisor from the dividend and increments a count. A step 232 then adds the sync value to the dividend in order to adjust for the sync field 15 and the address mark field 17 immediately following each servo wedge 14. Once complete, the count value holds the quotient (user data block number) and the subtractor holds the remainder which represents the byte offset within the identified user data block 18. A final process step 234 adjusts for any defective data blocks 18. A comparison is made between the calculated block number and a defective data block table in order to bypass data blocks found to be defective, either at the factory or during ongoing disk drive operations.

The formatter 204 uses the information provided by the format calculator 202 to initiate user data transfers. The primary function of the formatter 204 is to control the transfer of the data between the buffer controller 88 and the SERDES 116. The formatter 204 is controlled by a formatter control state machine circuit 206. Operation of the formatter 204 is essentially the same as has been described above in connection with the formatter 64. That discussion is incorporated herein by reference.

The function of the control circuit 206 is to initiate format calculations by the format calculator 202, to load the calculation results into the formatter 204 and to start its operation. This function also includes re-issuing calculation requests for multiple block handling, and determining if a multiple block transfer can be extended while in progress. It also monitors or controls boundary/error conditions, such as physical sector reset at the index mark 30 while maintaining logical block information. It also handles failure to read the index marker signal 30.

The normal sequence of the control circuit 206 is to initiate a format calculation upon a command request from the microcontroller 72. Once the calculation is complete, the control circuit 206 determines if the formatter 204 is busy (in a multiple command) and loads wedge and wedge byte numbers into the formatter 204. The control 206 then determines if another calculation is required in order to carry out a multiple block transfer. This control function continues until the single block transfer is complete, or a multiple block transfer is complete and a loop count has reached zero.

Error, boundary and update handling are carried out by the control 206, as follows: a) If the index is not seen on a track, the logic times out. b) If the servo address mark (SAM) is not seen for a wedge 14, the logic times out. c) If loop count is updated, a multiple block transfer is continued. d) If an index occurs during a transfer, a reset of the block number occurs.

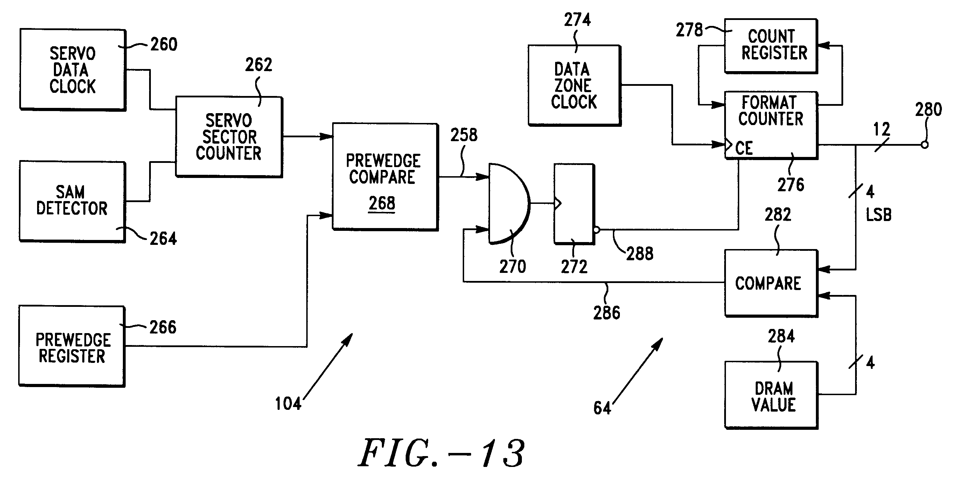

The state flow diagram for the control state machine 206 is provided in Fig. 12. The control circuit 206 begins operation from an idle state 240 at which an incoming command is decoded. A state 242 determines if the present block count represents a maximum block count, and if so, a state 244 resets the block counter. If not, or after reset of the block counter, the control 206 causes the operators to be loaded into the format calculator and then starts its operation. The control circuit 206 remains at the format calculation state 246 until the format calculator 202 has completed its calculations. Once the format calculation is complete, the control 206 determines if the formatter 204 is idle. If not, the control state machine 206 returns to the idle state 240. This return is made so that the calculation information from the format calculator 202 may be updated after the current data transfer operation is completed. Once the formatter 204 is at its idle state 160, a control state 250 causes the calculation results to be loaded into the operator. A state 252 causes the formatter 202 to be started.

The control state machine 206 also determines at the state 252 whether a multiple block transfer command is present. If so, the control state machine 206 loops at the state 252. When a multiple block transfer command is being executed, and the last block has not yet been transferred, a return is made to the state 242 which carries out a transfer overflow from or to the next track location. When a single block transfer command has been completed, or when a multiple block transfer command is being executed and the last block has been transferred, a return is made to the idle state 240.

One advantage of this alternative preferred embodiment is that the format calculator 202 eliminates any need to store data block format records in the buffer memory and retrieve each record in real time. This advantage is at the expense of additional hardware complexity needed to implement the format calculator. If sufficient storage space is available in the on-board buffer memory to store the data block format records, and an efficient data transfer mechanism is employed, the first preferred embodiment provides a lower cost implementation of the present invention than will be achieved with the alternative preferred embodiment.

### Embodiment of Figs. 13-14

Another modification of the first preferred embodiment eliminates circuitry within the wedge byte counters and comparators circuit 154 of the formatter 64. This alternative approach makes use of a sector counter 262 already provided within the servo detector circuit 104 and which operates reliably, even if a servo address mark is missed, as explained in the referenced U.S. Patent Application Serial No. 07/710,172 incorporated above. Turning to Fig. 13, this preferred alternative embodiment includes within the servo detector circuit 104 a servo data clock 260 for generating a servo data clock at the single clocking rate of the information recorded in each servo wedge 14 (See Fig. 4). A servo address mark detector 264 detects the servo address mark 28 provided in each servo wedge and resets the servo counter 262 as explained in conjunction with Fig. 4. above.

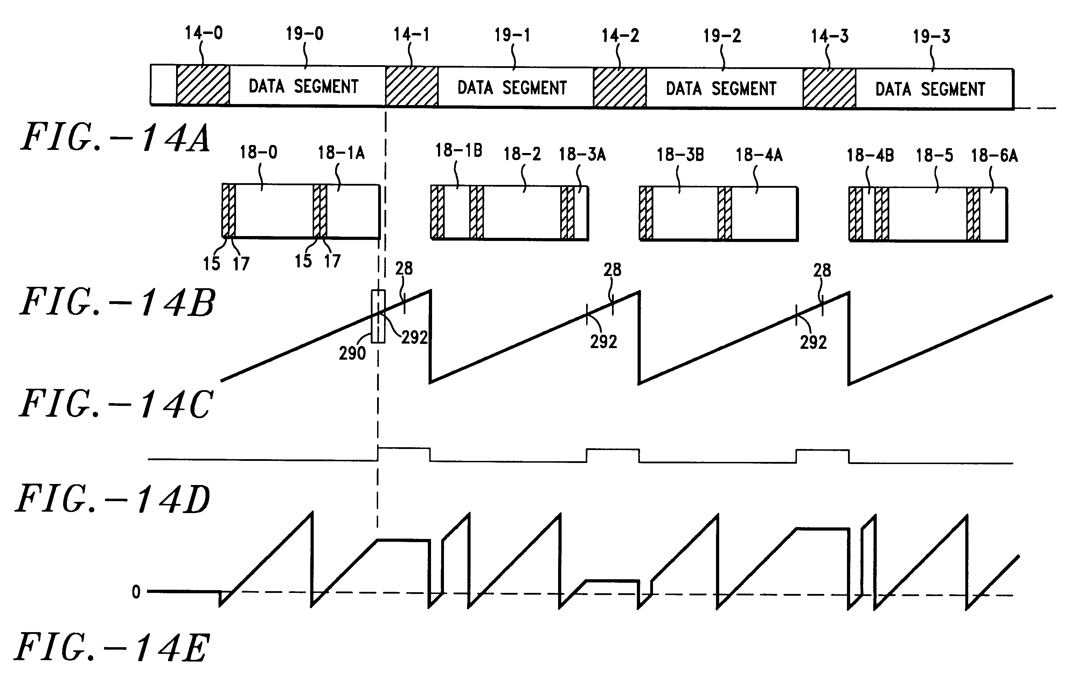

A prewedge register 266 and a prewedge comparator 268 are added to the servo detector circuit 104 generally in accordance with Fig. 13. The prewedge register 266 is loaded with a predetermined count value by the microcontroller 72. Since the sector counter has a 12 bit width, the prewedge register 266 is loaded with a 12 bit value, and the comparator 268 compare incoming 12 bit values from both the servo sector counter 262 and from the prewedge register 266. The count value represents a count reached by the servo sector counter 262 at a predetermined location (time) before arrival of the next servo sector 14. This preset count marks the beginning of a window 290 (Graph C of Fig. 14) which extends until the servo sector is reached. When the servo sector counter 262 reaches a count value equal to the value written in the prewedge register 266 a logical condition becomes true on a line 258 leading out of the servo detector circuit 104.

The line 258 extends to the formatter 64 and is applied as one input of an AND gate 270. The gate 270 clocks a latch 272 which holds the clocked logical condition until being reset at the end of each servo sector 14. A data zone clock 274 generates a data clocking rate adapted for each particular data zone (see Fig. 5A) and is within a phase locked loop of the read write channel 68. A data clock established by the clocking loop 274 clocks a format counter 276 at the data rate of the particular data zone. The output from the latch 272 extends to a count enable pin of the format counter 276. The output from the latch 272 is inverted or low when true, meaning that when asserted, the output 288 inhibits counting by the format counter 276.

The format counter 276 may be within the formatter counter circuit 154 described in conjunction with Fig. 7 above. The format counter 276 continues to define the data field format within each data segment 19, e.g. Fig. 14, graph B. When the output from the latch 272 is e.g. a logical high level(i.e. not true), the counter 276 counts in accordance with the clocking signal from the clocking circuit 274, either upwardly or downwardly, depending upon the circuit design. Upward counting of the format counter 276 is illustrated in Fig. 14, graph 3. The format counter 276 puts out e.g. a 12 bit word, representing byte positions within each data field 18. Four least significant bits of the format counters output are routed to a comparison circuit 282. A four bit value taken from the zone record of the DRAM is loaded into a DRAM value register 284 and isapplied as another input to the comparison circuit 282. With only four bits, a match will occur every sixteen counts of the format counter 278. All of these matches are ignored by the gate 270 until the prewedge compare value on the path 258 is true.

As mentioned above, the window 290 (Fig. 14, graph C) opens at the arrival of the signal on the path 258 and marks an interval during which the next match value received from the compare circuit 282 will clock the latch 272 to a true (low) state. When this wedge window signal occurs, as shown in Fig. 14, graph D, the format counter's count is stopped, and remains stopped until the servo sector 14 has passed by. At the end of the wedge window signal, the format counter 276 is reset to a negative value and begins counting upwardly to mark the ensuing data sync field 15 and data address mark field 17 which follows every servo sector 14, and which begins each new data field 18, as previously explained. This counting pattern of the format counter 276 is illustrated in Fig. 14, graph E.

The precise beginning of the wedge window signal within the window 290 is determined by the four bits held in the DRAM value register 284. In order to provide a proper margin to cover tolerances such as spindle speed variations, the wedge window signal begins at e.g. eight bytes before the imminently impending servo sector 14. This eight byte buffer varies from data zone to data zone because of differing data transfer rates. Thus, the physical starting point of the wedge window signal will vary from data zone- to data zone across the data storage surface of the disk 42. Accordingly, the value held in the DRAM value register 284 is updated every time a new data zone is accessed by the head positioning structure 50.

When the wedge window becomes asserted several events occur. First, as noted, the format counter 276 ceases to count for the duration of the wedge window and data reading or writing operations via the formatter 64 cease. Second, the count reached by the format counter 278 is saved in a count register 278. Third, following the wedge window (and possibly any data headers such as sync field 15, and address mark field 17) the saved count is reloaded from the count register 278 back into the format counter 276 and its counting is restarted, until a predetermined maximum count is reached. The maximum count denotes the end of a particular data field 18 and results in a rollover of the format counter 276 in order to begin counting out byte or word positions of the next data field 18.

In use of this preferred embodiment, the data record described above in conjunction with the Fig. 5B embodiment may be modified slightly. In the present embodiment of Figs. 13 and 14, the record may comprise a seven bit wedge number, a four bit DRAM value which is loaded into the DRAM value register 284, and a twelve bit block starting value for determining the beginning of a particular data block 18 within one of the data segments 19 The twelve bit value is then compared with the count increments of the servo sector counter 262 to locate the beginning of the particular data block 18 being sought. The sync field 15 and data address mark 17 at the beginning of the particular data block 18 provide sufficient information by which the data zone clock circuitry 274 can synchronize the format counter 276 to the block data stream during reads from disk. During a data block write to disk, the sync field 15 and address mark 17 are regenerated and rewritten following a write splice in conventional fashion.

The format counter 276 preferably counts out byte positions or locations within the particular data block 18. The programmed digital microcontroller 72 has direct access to the counts of the format counter 276 so that error corrections, etc. may be made on-the-fly, for example, in accordance with the teachings of the referenced U.S. Patent No. 5,241,546.

Thus, it will be appreciated by those skilled in the art that this alternative preferred embodiment realizes a reliable, robust prewedge logical condition enabling creation of a wedge window which provides a predetermined buffer, e.g. eight bytes, immediately preceding every servo sector 14, irrespective of the particular data zone or data transfer rate. Also, this approach makes additional use of a servo sector counter already present within servo decoder circuitry 104 of the disk drive 100.

From the foregoing description, it will be immediately apparent that the objects of the present invention have been fully realized, and that a number of additional benefits are achieved from the present invention. For example, as the servo wedges preferably include cylinder number information, a reading operation may be commenced immediately upon arriving at a selected destination track, in accordance with the servo wedge information, without having to wait for a track ID field to be read. Also, the beginning of a data sector or field may also be established by reference to the location of a preceding data sector's ECC field. In order to be sure that index is not missed, a synthetic index counter may be provided within the formatter in addition to the index timer within the servo detector 104, so that critical timing and location processes which depend upon a robust index marker operate reliably and invariably.

Having thus described an embodiment of the invention, it will now be appreciated that the objects of the invention have been fully achieved, and it will be understood by those skilled in the art that many changes in construction and widely differing embodiments and applications of the invention will suggest themselves without departing from the spirit and scope of the invention. The disclosure and the description herein are purely illustrative and are not intended to be in any sense limiting.

In a disk drive including a rotating disk defining a multiplicity of concentric data storage tracks, a transducer head for writing data to selected locations of user date blocks within the tracks, a positioning mechanism for positioning the transducer head over the tracks, and a head position servo control loop including the head positioning mechanism and the head for reading head positioning information within a plurality of spaced apart servo sectors prerecorded at a predetermined servo data rate, a method embodying the invention for locating the beginning of a particular data block within a user data block segment at a track extending between adjacent ones of the servo sectors and without use of a data block identification field at the beginning of the block may comprise the steps of:
dividing an interval including the user data segment into a predetermined number of count increments beginning with a starting increment and continuing successively to an ending increment,
determining a block location starting count value as one of said increments corresponding to the beginning of a desired data block location,
starting counting of the increments at the beginning of the interval including the user data segment,
comparing each counted increment with the count value to determine an equivalence, and
upon a determination of equivalence, starting transfer of a data record to or from the particular data block.

The method may comprise the further step of counting block locations at a rate related to a data transfer rate of the particular block starting with the determination of equivalence.

Each servo sector may include a servo address mark and comprising the further steps of detecting the servo address mark and thereupon resitting the servo sector counting process.

The method may comprise the further steps of:
detecting a beginning of a next servo sector during continuance of the block location counting step,
suspending the block location counting step upon detection of the servo sector beginning, and saving a count value then reached,
detecting a starting location of a subsequent user data storage segment following an end of the said next servo sector,
restoring the count value, and
resuming counting of the block byte location counts until a block byte count total is reached which corresponds to an end of the particular data block.

The method may further comprise the step of generating a servo sector window starting at a predetermined distance prior to the beginning of a next servo sector.

The step of generating a servo sector window may include the step of comparing each counted increment with a predetermined window starting value.

The data tracks may be arranged as zones and wherein each zone has a data transfer rate adapted to a radius of the zone from an axis of rotation of the disk, and comprising the further steps of generating the predetermined window starting value as a function of data transfer rate of a said zone in which a track containing the particular data block is located.

The step of generating the predetermined window starting value may comprise the further step of comparing each predetermined window starting value with a zone value related to the said zone.

The step of detecting the beginning of the next servo sector may be performed by detecting the ending increment of the user data storage segment.

The step of detecting the beginning of the next servo sector may be performed by comparing the count increments with a predetermined prewedge value to determine a prewedge equivalence occurring before arrival of said beginning.

The step of detecting the beginning of the next servo sector may include the further step of comparing the prewedge equivalence with a value derived from the step of counting block byte locations, so that the detecting step occurs at a predetermined number of bytes at the block data transfer rate before actual beginning of the next servo sector.

The method may comprise the further steps of:
providing a synchronizing field and a data address mark of predetermined count length at the beginning of the particular data block, and
starting the step of counting block byte locations at a negative count corresponding to the predetermined count length, so that said counting step reaches a zero count at a first user byte location following the synchronizing field and data address mark of the particular block.

The method may comprise the steps of writing the synchronizing field and the data address mark at the beginning of the particular data block during a data writing-to-disk operation, and reading the synchronizing field and the address mark at the beginning of the particular data block during a data reading-from-disk operation.

The method may comprise the further steps of:
establishing a count window for detecting the data address mark at the beginning of the particular data block during the data reading operation, and
resetting the count of block byte location counts to the zero count upon detection of the data address mark within the count window.

The method may comprise the further step of signalling an error condition if the data address mark is not detected within the count window.

The may comprise the further steps of:
providing a block resumption synchronizing field and a block resumption address mark of predetermined count length at the beginning of the subsequent user data storage segment, and
starting the step of counting record value locations at a negative count corresponding to the predetermined count length until a zero count is reached, and
restarting counting of the restored count value when the zero count is reached.

The method may comprise the steps of writing the block resumption synchronizing field and the block resumption address mark at the beginning of the subsequent user data storage segment during a data writing-to-disk operation, and reading the block resumption synchronizing field and the block resumption address mark at the beginning of the subsequent user data storage segment during a data reading-from-disk operation.

The method may comprise the further steps of:
providing a block resumption synchronizing field and a block resumption data address mark of predetermined count length at the beginning of the subsequent user data segment,
starting the step of counting record value locations at a negative count corresponding to the predetermined count length until a zero count is reached,
establishing a count window for detecting the data address mark in relation to occurrence of the zero count, and
resuming counting of the block byte location counts upon detection of the data address mark within the count window.

The step of determining a count value corresponding to the beginning of the particular data block may be performed by the steps of providing data block format records in a memory and retrieving a data block format record corresponding to said block location.

The step of determining a count value corresponding to the beginning of the particular data block may be performed by the step of calculating the count value based upon a predetermined plan of data blocks for the concentric tracks.

The method may comprise the further steps of:
providing a servo sector identification value in each servo sector,
detecting the servo sector identification value as a corresponding servo sector is read by the transducer head,
correlating the detected servo sector identification value with the particular data block to determine that the user data storage segment containing the beginning of the particular data block has been reached.

The features disclosed in the foregoing description, in the following claims and/or in the accompanying drawings may, both separately and in any combination thereof, be material for realising the invention in diverse forms thereof.

## Claims

**1.** In a disk drive architecture including a rotating data storage disk, a positionable transducer for reading data from and writing data to a storage surface of the disk, the transducer being positioned by a head positioner servo loop, the storage surface including a multiplicity of servo sectors prerecorded with head positioning information read by the head for the servo loop for locating desired ones of an available multiplicity of concentric data tracks, each track having a series of data blocks at least some of which being split into segments by ones of the servo sectors in accordance with a predetermined pattern, and wherein the data tracks are recorded at a different data rate than said head positioning information and do not include data identification fields, apparatus for determining a location of a particular data block comprising:
a data segment counter means for counting a predetermined number of count increments including a data track segment lying between two adjacent servo sectors,
block location circuit means for determining a block location starting count value within the data track segment corresponding to a beginning of the particular data block,
comparison means for comparing the count of the data segment counter means with the starting count value of the block location circuit means to detect the beginning of the particular data block,
data transfer control means in a signal path between the data transducer head and a buffer memory for controlling transfer of user information in the particular data block between the buffer memory and the desired data block location in response to detection of the beginning thereof.

**2.** The disk drive architecture set forth in claim 1 wherein the block location circuit means includes the buffer memory and block values in accordance with the predetermined pattern are recorded in the buffer memory, and the block location circuit means includes block format retrieval means for retrieving a block format from a known location of the buffer memory for the particular data block.

**3.** The disk drive architecture set forth in claim 1 wherein the block location circuit means includes format calculator means for calculating the block location starting count value corresponding to the beginning of the particular data block.

**4.** The disk drive architecture set forth in claim 1 further comprising data block counter means for counting data value increments defining a length of the particular data block.

**5.** The disk drive architecture set forth in claim 2 further comprising servo sector decoding means for detecting an occurrence of each servo sector, and for decoding at least some of the head positioning information read by the head, the servo sector decoding means providing control values including a once-per-revolution index signal and a servo sector wedge control signal to the data transfer control means.

**6.** The disk drive architecture set forth in claim 5 further comprising servo sector decoding means for detecting an occurrence of each servo sector, and for decoding a servo sector number within the head positioning information read by the head, the servo sector decoding means for providing the servo sector number to a comparison circuit for comparing the servo sector number read from the servo sector with a servo sector number counter for counting each servo sector in response to the servo sector wedge control signal, the servo sector number counter being reset by the once-per-revolution index signal.

**7.** The disk drive architecture set forth in claim 5 wherein a said servo sector interrupts the desired data block and further wherein the data transfer control means responds to the servo sector wedge control signal for stopping the data block counter means from counting data value increments during said servo sector.

**8.** The disk drive architecture set forth in claim 7 wherein the data segment counter means comprises a servo sector counter within the head positioner servo loop for counting increments at a data transfer rate associated with said head positioning information, and further comprising a prewedge register means for holding a prewedge increment value reached by the servo sector counter before arrival at the next servo sector, and comparison means for comparing each count increment of the servo sector counter with the prewedge increment value and signalling an equivalence to the data transfer control means.

**9.** The disk drive architecture set forth in claim 1 wherein the data transfer control means includes a format counter clocked at a data transfer rate associated with the particular block and reset means for resetting the format counter when it reaches a count marking the end of the particular data block.

**10.** The disk drive architecture set forth in claim 9 wherein the count marking the end of the particular block is a fixed count length for all data blocks.

**11.** The disk drive architecture set forth in claim 9 wherein the count marking the end of the particular block is a variable count, and further comprising determining means for determining the variable count on a block by block basis.

**12.** The disk drive architecture set forth in claim 9 further including embedded programmed microcontroller means having direct access to the format counter to read the count thereof in order to locate a data value position within the particular data block.

**13.** The disk drive architecture set forth in claim 4 wherein each data block includes a data address mark field at the beginning thereof, and further comprising data address mark detector means for detecting the data address mark and for thereupon resetting the data block counter means.

**14.** The disk drive architecture set forth in claim 9 wherein each data block includes a data address mark field at the beginning thereof, and wherein the reset means includes data address mark detector means for detecting the data address mark and for thereupon resetting the format counter.

**15.** In a disk drive architecture including a rotating data storage disk, a positionable transducer for reading data from and writing data to a storage surface of the disk, the transducer being positioned by a head positioner servo loop, the storage surface including a multiplicity of servo sectors prerecorded with head positioning information read by the head for the servo loop for locating desired ones of a multiplicity of concentric data tracks, each track having a series of data blocks at least some of which being split into segments by ones of the servo sectors in accordance with a predetermined pattern, the servo loop including a servo sector decoder means for decoding the head positioning information in the servo sectors and for marking in time the location of each servo sector, and wherein the data tracks are recorded at a data rate different than a rate of said head positioning information and do not include data identification fields, apparatus for determining a location of each data block comprising:
an internal counter means responsive to the servo decoder means for counting a predetermined number of count increments including a data track segment lying between two adjacent servo sectors,
block location circuit means for determining a block location starting count value within a segment corresponding to a beginning of a desired data block location,
comparison means for comparing the count of the data segment counter means with the starting count value of the block location circuit means to detect the beginning of the desired data block location,
data transfer control means in a signal path between the data transducer head and a buffer memory for controlling transfer of a data block between the buffer memory and the desired data block location in response to detection of the beginning thereof.

**16.** The disk drive architecture set forth in claim 15 wherein the head positioning information in the servo sectors includes a servo address mark, wherein the servo sector decoder means detects the servo address mark and puts out a servo address mark found signal to restart the data segment counter means.

**17.** The disk drive architecture set forth in claim 16 wherein the data segment counter means includes automatic reset means for automatically resetting the data segment counter means to a predetermined value when a predetermined maximum count is reached therein in lieu of reception of the servo address mark found signal.

**18.** The disk drive architecture set forth in claim 15 wherein the block location circuit means includes the buffer memory and block values in accordance with the predetermined pattern are recorded in the buffer memory, and the block location circuit means includes block format retrieval means for retrieving a block format from a known location of the buffer memory for the desired block location.

**19.** The disk drive architecture set forth in claim 15 wherein the block location circuit means includes format calculator means for calculating the block location starting count value corresponding to the beginning of the desired data block.

**20.** The disk drive architecture set forth in claim 15 further comprising data block counter means for counting data value increments defining a length of the desired data block location.

**21.** The disk drive architecture set forth in claim 15 wherein the intemal counter means comprises a data format counter which counts the user data segment at a rate related to data transfer rate of the data block.

**22** The disk drive architecture set forth in claim 15 wherein the internal counter means comprises a servo sector counter which counts a servo sector to servo sector interval at a rate related to a data transfer rate of the head positioning information.

**23.** A disk drive architecture including a rotating data storage disk, a positionable transducer for reading data from and writing data to a storage surface of the disk, the transducer being positioned by a head positioner servo loop, the storage surface including a multiplicity of servo sectors prerecorded with head positioning information read by the head for the servo loop for locating desired ones of an available multiplicity of concentric data tracks, each track having a series of data blocks at least some of which being split into segments by ones of the servo sectors in accordance with a predetermined pattern, and wherein the data tracks are recorded at a different data rate than said head positioning information and do not include data identification fields, embedded programmed microcontroller means for controlling the head position servo loop and data transfer to and from the storage surface, and buffer memory means for temporarily holding data blocks and information related to data block format, the architecture further including circuitry for determining a location of a particular data block comprising:
a data segment counter means for counting a predetermined number of count increments including a data track segment lying between two adjacent servo sectors,
block location circuit means responsive to data block format stored within the buffer memory means, for determining a block location starting count value within the data track segment corresponding to a beginning of the particular data block,
comparison means for comparing the count of the data segment counter means with the starting count value of the block location circuit means to detect the beginning of the particular data block,
data transfer control means in a signal path between the data transducer head and a buffer memory for controlling transfer of user information in the particular data block between the buffer memory and the desired data block location in response to detection of the beginning thereof.

**24.** A disk drive architecture including a rotating data storage disk, a positionable transducer for reading data from and writing data to a storage surface of the disk, the transducer being positioned by a head positioner servo loop, the storage surface including a multiplicity of servo sectors prerecorded with head positioning information read by the head for the servo loop for locating desired ones of an available multiplicity of concentric data tracks, each track having a series of data blocks at least some of which being split into segments by ones of the servo sectors in accordance with a predetermined pattern, and wherein the data tracks are recorded in zones at data rates related to storage disk radius and do not include data identification fields, embedded programmed microcontroller means for controlling the head position servo loop and data transfer to and from the storage surface, and buffer memory means for temporarily holding data blocks and information related to data block format, the architecture further including circuitry for determining a location of a particular data block comprising:
a servo sector counter means within the head positioner servo loop for counting a predetermined number of count increments including a data track segment lying between two adjacent servo sectors, the servo sector counter means being reset upon detection of a servo address mark within the head positioning information,
block location circuit means for determining a block location starting count value within the data track segment corresponding to a beginning of the particular data block,
comparison means for comparing the count of the data segment counter means with the starting count value of the block location circuit means to detect the beginning of the particular data block,
data transfer control means including a format counter means in a signal path between the data transducer head and a buffer memory for controlling transfer of user information in the particular data block between the buffer memory and the desired data block location in response to detection of the beginning thereof, the data transfer control means further including:
a prewedge register means for holding a prewedge value provided by said microcontroller means related to a particular zone including a track containing the particular data block and marking a location just before a next servo sector,
prewedge comparison means for comparing each count increment of the servo sector counter means with the prewedge value and for signalling an equivalence,
memory value register means for holding a format value stored in the bufer memory,
memory value comparison means for comparing the format value with at least a portion of a count reached by the format counter means and for signalling an equivalence,
logic means enabled by the equivalence between the prewedge value and the servo sector count increment to pass a control signal represented by said equivalence between the format value and the count portion of the format counter means for stopping the format counter means at a predetermined number of data storage locations before arrival of the next servo sector,
count register means for holding the count reached by the format counter upon cessation in response to the control signal,
count restoration means for restoring the count to the format counter and for restarting the format counter after the next servo sector has passed by, and
count reset means for resetting the format counter when a maximum count is reached marking the end of the particular data block.
